# FASCICULE DE BREVET EUROPEEN

(11) **EP 0 946 103 B1**
(45) Date de publication et mention de la délivrance du brevet: **09.01.2002**
(21) Numéro de dépôt: 97947122.4
(22) Date de dépôt: 21.11.1997
(51) Int. Cl.: A23B 4/00, A23B 4/07, A23L 1/33

(54) **PROCEDE ET INSTALLATION DE TRAITEMENT DE PRODUITS DE LA MER ET EN PARTICULIER DE CREVETTES**
VERFAHREN UND VORRICHTUNG ZUR BEHANDLUNG VON SEEPRODUKTEN, INSBESONDERE GARNELEN
DEVICE AND INSTALLATION FOR TREATING SEAFOOD AND IN PARTICULAR PRAWNS

(30) Priorité: 22.11.1996 FR 9614502
(43) Date de publication de la demande: 06.10.1999
(73) Titulaire: France Agro Industries, 44340 Bougueneais (FR)
(72) Inventeur: BENARDEAU, Guy, F-44860 Saint Aignan de Grand Lieu (FR)
(74) Mandataire: Phélip, Bruno
(86) Numéro de dépôt international: FR9702112
(87) Numéro de publication internationale: WO9821974

(56) Documents cités:
- AU-A- 4 141 778
- AU-B- 464 932
- FR-A- 2 560 500
- FR-A- 2 711 485
- US-A- 4 714 618

## Description

La présente invention concerne un procédé de traitement des produits de la mer et en particulier de crevettes congelées. L'invention concerne également l'installation pour la mise en oeuvre du procédé.

La conservation des crevettes fraîches par congélation permet de différer leur consommation. Ces produits se retrouvent sur les étalages après avoir subi une cuisson dans un bain de saumure.

La manipulation des crevettes pendant leur traitement qui consiste tout d'abord à effectuer une décongélation, puis, une cuisson et ensuite un refroidissement pour permettre une conservation pendant quelques jours, provoque une détérioration d'une partie non négligeable des produits comme par exemple la séparation de la tête du reste du corps.

La présente invention propose un procédé et une installation de mise en oeuvre qui permet de réduire de façon notable les pertes par détérioration des produits.

Il existe des procédés de traitement de produits divers, lesquels produits se présentent sous la forme de blocs congelés, de masse importante entre 10 et 50 kg par exemple. Un procédé de ce genre, comme décrit dans le document US-4 714 618, pour des blocs de viande, comporte une suite d'opérations qui permet d'aboutir à des produits transformés et consommables.

Ce procédé et l'installation pour la mise en oeuvre présentent généralement un caractère discontinu qui implique de nombreuses manutentions et de ce fait, sont inadaptés à des produits aussi fragiles que des crevettes.

Le document AU-4 64932 montre une installation qui permet de décongeler des crevettes par aspersion. Les crevettes sont disposées dans des paniers et ces paniers se déplacent au moyen d'un convoyeur, sous des rampes d'aspersion.

Ce document montre que des produits comme les crevettes nécessitent un certain soin.

Le procédé selon l'invention consiste à traiter les produits en continu au moyen d'une installation appropriée de convoyage et à gérer, en fonction des paramètres caractéristiques desdits produits tels que l'espèce, la taille et aussi leur présentation c'est-à-dire la dimension des blocs et le pourcentage de glace dans ces blocs, d'une part, le temps de cuisson lequel définit la vitesse d'avancement des produits dans la chaîne de traitement et, d'autre part, la température du fluide de décongélation, et celle du fluide de refroidissement.

Selon une disposition préférentielle de l'invention, le procédé consiste à gérer le temps de cuisson et la température du fluide de refroidissement en fonction des paramètres spécifiques des produits à savoir la taille et l'espèce, et à gérer la température du fluide de décongélation en fonction de l'ensemble des paramètres c'est-à-dire la taille et l'espèce des produits et surtout leur présentation c'est-à-dire les dimensions et teneur en glace des blocs.

L'invention concerne également l'installation pour la mise en oeuvre du procédé, laquelle installation comporte disposés les uns à la suite des autres :
- un poste de chargement de la chaîne de traitement où les blocs de crevettes congelées sont déposés ou acheminés par tout moyen approprié ;
- un poste de décongélation des crevettes où cette opération s'effectue au moyen d'une immersion dans de l'eau qui circule à co-courant ;
- un poste de traitement pour stabiliser les crevettes au moyen d'un produit du genre métabisulfite avec lequel elles sont aspergées ;
- un poste de cuisson où les crevettes sont trempées dans un bain approprié qui circule à co-courant en circuit fermé ;
- un poste de lavage des crevettes cuites, par aspersion d'eau ;
- un poste de refroidissement où les crevettes sont trempées dans un bain de saumure, à contre-courant en circuit fermé ;
- un poste d'égouttage des crevettes avant leur conditionnement éventuel ;
les crevettes circulent du poste de chargement au poste d'égouttage, d'une manière continue au moyen d'un dispositif convoyeur, lequel convoyeur a une vitesse qui est déterminée en fonction des paramètres spécifiques des crevettes à traiter pour obtenir un temps de cuisson approprié, lesquels paramètres et la vitesse du convoyeur servent à régler la température de refroidissement des produits après cuisson et, en tenant compte en plus des paramètres de présentation des produits c'est-à-dire de la dimension et de la teneur en glace des blocs congelés, à déterminer la température du fluide de décongélation.

Selon une disposition préférentielle de l'invention, l'installation comprend un automate qui prend en compte les données liées aux paramètres spécifiques des produits à traiter c'est-à-dire l'espèce et la taille des crevettes et les données concernant les paramètres liés à la présentation de ces produits congelés c'est-à-dire la taille des blocs et leur teneur en glace d'eau, lequel automate en fonction des données liées aux paramètres spécifiques des produits établit un temps de cuisson de ces derniers d'où il découle une vitesse d'avancement du convoyeur et, d'une part, une température de refroidissement et. d'autre part, en prenant en compte en plus les données liées à la présentation des produits congelés, il découle une température du fluide de décongélation.

Selon une disposition préférentielle de l'invention, le retour des fluides qui circulent dans les bacs des postes de traitement, s'effectue de façon gravitaire.

Selon une autre disposition de l'invention, les circuits aller de remplissage des bacs et les circuits retour des bacs de cuisson et de refroidissement, comportent des vannes du type système trois voies qui permettent de vidanger les circuits et d'isoler les générateurs et l'échangeur

Selon une autre disposition de l'invention. le générateur de chaleur (chaudière) pour la cuisson et l'échangeur, ont des capacités d'accueil et de stockage des fluides correspondants qui permettent de les maintenir à température pendant les opérations de nettoyage et/ou de désinfection des bacs notamment, de façon à réaliser des économies d'énergie.

Selon l'invention, l'installation peut aussi comporter des cuves complémentaires pour stocker plusieurs bains de cuisson correspondant à des recettes de cuisson différentes. Ces bains sont transférés dans les cuves de stockage au moyen de la pompe de mise en circulation du fluide, qui se situe en sortie de la chaudière et il retourne dans cette dernière par simple gravité par exemple avec un jeu de vannes appropriées.

Toujours selon l'invention, chacun des circuits de remplissage des bacs des fluides comporte des circuits d'introduction d'additifs de cuisson et/ou de produits de traitement pour effectuer les opérations de nettoyage et de désinfection.

Selon une autre disposition de l'invention, le convoyeur peut être constitué d'un tapis sans fin sur lequel sont posés directement les produits, lequel tapis peut aussi être associé à des moyens de nettoyage du genre brosses mises en oeuvre de façon continue ou régulièrement lors des opérations de nettoyage.

Toujours selon l'invention, les crevettes peuvent être posilionnées dans des paniers qui sont posés sur un convoyeur du genre tapis sans fin ou associés à un convoyeur aérien, suspendus à un rail.

Selon une autre disposition de l'invention, l'installation comporte un châssis formé de tubes qui constituent directement les conduits d'alimentation des différents bacs et des rampes d'aspersion, de façon à éviter la multiplication des tuyauteries de toute sorte.

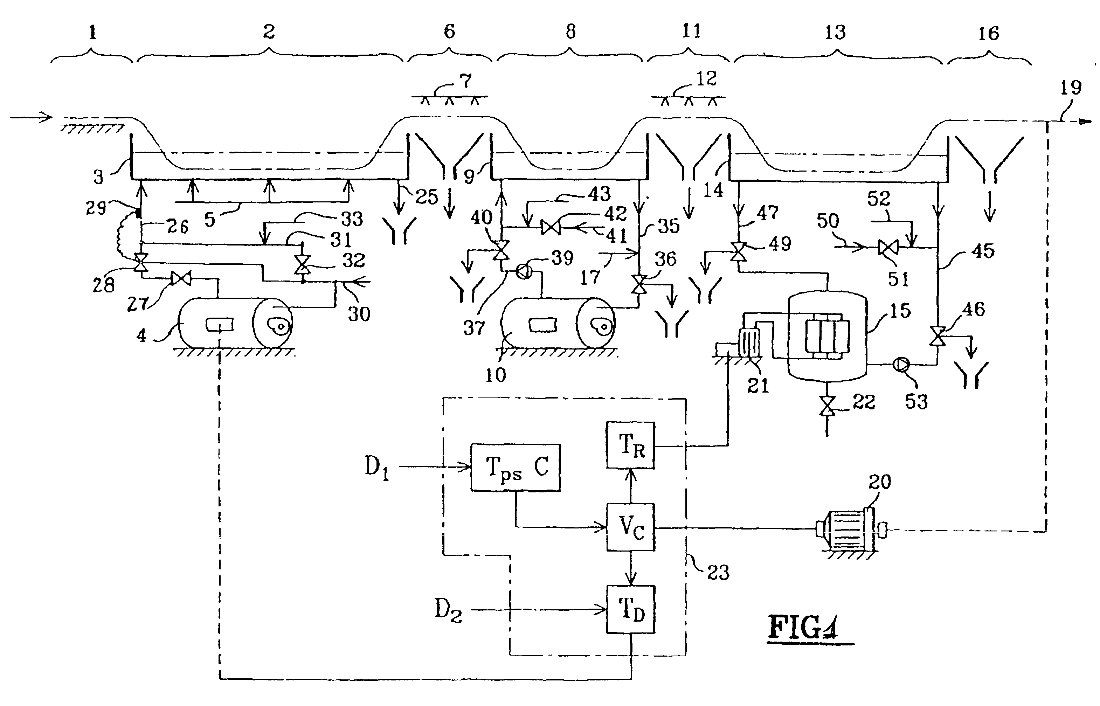

L'invention sera encore détaillée à l'aide de la description suivante et du dessin annexé qui représente, de façon schématique, l'installation de traitement selon l'invention.

Cette installation de traitement comprend un poste de chargement 1 où les blocs de crevettes congelées sont acheminés par tout moyen approprié Les produits arrivent au poste de chargement 1, sous forme de blocs parallélépipédiques, comprenant essentiellement les crevettes et une certaine quantité de glace, selon les procédés de congélation. Cette quantité de glace varie entre une quantité très faible et près de 50 % du poids des blocs. ils sont déplacés vers un poste de décongélation 2 qui comprend un bac 3 dans lequel circule un fluide qui est chauffé à une température appropriée au moyen d'un générateur de chaleur constitué d'une chaudière 4.

La température de ces blocs de crevettes congelées varie entre 20 et 25°C en-dessous de 0. Les crevettes sont décongelées dans le bac 3, par trempage dans de l'eau chaude qui circule à co-courant et qui s'échappe vers des collecteurs d'égouts ou autres. Le bac 3 peut également comporter des moyens d'insufflation d'air constitués par exemple d'une rampe 5 et de jets introduisant de l'air sous pression dans le bac pour provoquer une agitation de l'eau autour des blocs, favorisant ainsi leur déstructuration.

Le bac de décongélation 3 est suivi d'un poste de traitement 6 où les crevettes sont aspergées avec un produit du genre métabisulfite qui permet de les stabiliser. Ce poste 6 comporte une rampe d'aspersion 7 et le produit de traitement est évacué vers des unités de récupération ou autres, non représentés.

Le traitement de stabilisation au poste 6 permet, en plus, d'effectuer une sorte de rinçage des produits pour les débarrasser des morceaux d'antennes. de pattes ou autres.

A la suite du poste de traitement. on trouve le poste de cuisson 8 qui est constitué lui aussi d'un bac 9 dans lequel circule un fluide et en particulier une saumure qui est chauffée à une température appropriée proche de l'ébullition, au moyen d'un générateur de chaleur constitué d'une chaudière 10. Les crevettes sont trempées dans ce bain et, après cuisson, elles sont lavées et nettoyées au poste 11, au moyen d'une rampe d'aspersion 12 qui projette de l'eau par le dessus. L'eau de rinçage est évacuée vers des unités de récupération ou autres.

Ce lavage au poste 11 permet d'éliminer notamment les mousses et éventuellement des déchets de pattes, d'antennes ...

Après lavage, les produits sont refroidis au poste 13 par trempage dans un bain de saumure qui circule à contre-courant dans un bac 14, la température de cette saumure est obtenue au moyen d'un échangeur 15.

Après refroidissement pour les amener à une température de l'ordre de 1°C environ, les crevettes sont égouttées au poste 16 et sont ensuite évacuées vers un poste de conditionnement éventuel, non représenté

La cuisson dans le bac 9 au poste 8, s'effectue dans une saumure qui peut éventuellement être complétée au moyen d'additifs. Ces additifs sont introduits dans le circuit, en amont de la chaudière 10 par une tubulure 17. Cette saumure est portée à une température de l'ordre de 95°C environ et le temps de séjour des crevettes est compris entre 1,5 à 3 mn environ selon l'espèce et aussi selon la taille.

Comme mentionné précédemment, les paramètres D1 liés aux produits à traiter c'est-à-dire l'espèce et la taille des crevettes, conditionnent le temps de cuisson, TpsC En fonction des dimensions de l'installation, ce temps de cuisson détermine la vitesse d'avancement Vc des crevettes, qui sont déplacées par un convoyeur. Ce convoyeur 19 schématisé par un trait d'axe mixte fin, circule de poste en poste en déplaçant les crevettes. Le convoyeur 19, évolue à une vitesse constante du poste de chargement 1 au poste d'égoutage 16, entraîné par un organe moteur 20. Ce convoyeur 19 peut consister en un tapis sur lequel les crevettes sont posées directement ou indirectement par l'intermédiaire de paniers. Ce convoyeur peut également être du type aérien, constitué d'un rail auquel sont suspendus des paniers qui contiennent les crevettes.

Ce convoyeur est un convoyeur sans fin qui évite toute manipulation ou déplacement des crevettes entre le poste de chargement 1 et le poste d'égouttage 16 au-delà duquel elles sont conditionnées.

La vitesse de déplacement des produits dans le bac de refroidissement, sous l'effet du convoyeur 19, permet de déterminer une température TR pour le fluide de refroidissement qui circule dans le bac 14. Cette consigne de température est donnée au groupe motocompresseur 21 de l'échangeur 15 dans lequel les éléments de refroidissement sont de préférence du type à plaques.

Le refroidisseur à plaques, à ruissellement, permet de séparer les déchets par exemple, lesquels se déposent dans le fond par gravité, et peuvent être évacués par la vanne 22 située sous l'échangeur.

La température TD du fluide de décongélation est déterminée elle aussi au moyen de la vitesse du convoyeur 19 et en fonction également de paramètres complémentaires D2 qui sont par exemple liés aux dimensions des blocs de produits congelés et la teneur en glace de ces blocs.

Cette consigne de température TD est introduite au niveau de la chaudière 4 qui est chargée de chauffer le fluide de décongélation qui circule à co-courant dans le bac 3.

Les paramètres D1 et D2 sont introduits dans un appareil de commande 23 qui est par exemple du genre automate, lequel traite les informations et donne les consignes au compresseur 21, à la chaudière 4 et au moteur 20 qui entraîne le convoyeur.

Les bacs de traitement des crevettes, c'est-à-dire le bac 3 de décongélation, le bac 9 de cuisson et le bac 14 de refroidissement se vidangent par simple gravité avec contrôle de niveau

Le circuit d'alimentation du bac de décongélation 3 est ouvert c'est-à-dire que l'eau de décongélation est évacuée vers des unités de traitement ou autres non représentées, à sa sortie 25.

Le circuit aller 26 d'alimentation du bac 3 de décongélation comprend, partant de la chaudière 4, une vanne automatique 27. La température du fluide de décongélation est ajustée par une introduction d'eau directement dans le circuit 26 d'alimentation à travers une vanne mélangeuse 28 qui est pilotée par la température dudit fluide au moyen d'un capteur 29 placé soit sur le circuit d'alimentation 26 comme représenté, soit sur le circuit d'évacuation 25. L'arrivée d'eau 30 sert à alimenter la chaudière 4 ; elle sert également à ajuster la température du bain de décongélation ; elle sert aussi à effectuer le rinçage du circuit 26 et du bac 3. Le circuit de rinçage 31 est isolé au moyen d'une vanne 32 disposée sur l'arrivée d'eau 30. Ce circuit de rinçage 31 peut également comporter une conduite 33 permettant d'introduire un produit additif de nettoyage et/ou de désinfection par exemple.

Le circuit d'alimentation du bac de cuisson 9 est un circuit en boucle Ce circuit comporte sur sa branche retour 35, un système du type vanne trois voies 26 qui permet d'effectuer une vidange et d'isoler la chaudière 10. Le circuit aller 37 entre la chaudière 10 et le bac 9 comporte une pompe de circulation 39 et entre cette pompe et ledit bac 9. un système du type vanne trois voies 40 qui permet de vidanger ledit circuit et d'isoler la chaudière 10.

La chaudière 10 est une chaudière à réserve de fluide. Ainsi, en cas d'arrêt de l'installation, le bac 9 se vidange dans la chaudière et on obtient ainsi un maintien en température du fluide de cuisson et, par voie de conséquence, des économies substantielles d'énergie.

Une arrivée d'eau 41 avec une vanne 42 est prévue entre la vanne 40 du circuit d'entrée 37 et la cuve 9 Une conduite 43 branchée sur l'arrivée 41, permet par exemple l'introduction de produits additifs de nettoyage et/ou de désinfection, lorsque l'on effectue une opération de rinçage des tuyauteries et de la cuve 9 après isolation de la chaudière au moyen des vannes 36 et 40.

Le circuit de retour 35 comporte un filtre de régénération non représenté, et la conduite 17 dont il a été question précédemment, laquelle conduite 17 permet l'introduction de produits additifs tels que des colorants ou autres dans la saumure de cuisson des crevettes.

II est possible d'adopter plusieurs recettes de cuisson. A cet effet, l'installation peut comporter des cuves non représentées, pour le stockage des bains de cuisson correspondant aux différentes recettes. Le transfert des fluides correspondants dans les cuves de stockage peut se faire au moyen de la pompe 39 et le remplissage du circuit chaudière 10, bac 9, avec le bain choisi, par simple gravité, grâce à un jeu de vannes appropriées

Le circuit du fluide de refroidissement s'apparente à celui détaillé précédemment pour le fluide de cuisson. Le fluide de refroidissement circule à contre-courant en circuit en boucle. Le circuit d'introduction 45 comporte un système du type vanne trois voies 46 qui permet de vidanger le circuit entre ladite vanne et la cuve 14. Le circuit retour 47 comporte un filtre de régénération non représenté, et également un système du type vanne trois voies 49 qui permet d'isoler l'échangeur 15 et de vidanger la cuve 14.

Une arrivée d'eau 50 est prévue sur le circuit aller 45 avec une vanne 51 d'isolation. Là encore, une conduite 52 permet d'introduire un produit additif pour le nettoyage et/ou la désinfection des conduites et surtout de la cuve 14 après isolation de l'échangeur 15.

L'échangeur 15 a une capacité qui permet, lors de l'arrêt de l'installation, de récupérer par simple gravité tout le fluide contenu dans le bac 14 et de le maintenir en température réalisant ainsi des économies non négligeables d'énergie. Le fluide circule au moyen d'une pompe 53 interposée entre l'échangeur 15 et la vanne 46 sur le circuit d'alimentation 45.

La vidange de tous les circuits permet d'éviter les stagnations de saumure au niveau desquelles on peut voir surgir des développements bactériologiques nuisibles. De plus, l'isolement de ces circuits permet un nettoyage efficace des circuits eux-mêmes et des différentes cuves et surtout une désinfection.

Des moyens complémentaires peuvent être associés à l'installation comme par exemple des brosses, non représentées, pour effectuer un nettoyage du tapis convoyeur si les crevettes sont disposées directement sur ledit tapis. Ce nettoyage peut s'effectuer en continu ou régulièrement lors des opérations de nettoyage des bacs

La réutilisation des fluides utilisés pour la cuisson, et pour le refroidissement, limite également les phénomènes de pollution.

Les dimensions de l'installation comme par exemple les capacités des différents bacs, sont déterminées en fonction du tonnage à traiter. Le châssis de l'installation est de préférence constitué de tubes qui font office de tuyauteries pour l'alimentation des bacs 3, 9, 14 et des rampes d'aspersion 7 et 12 par exemple.

## Revendications

1. Procédé de traitement de produits de la mer, du genre crevettes, qui se présentent sous la forme de blocs congelés, lequel procédé comprend les étapes suivantes :
- une décongélation par immersion dans un bac (3) contenant un fluide chauffé à une température appropriée ;
- un traitement de stabilisation par aspersion au moyen d'une rampe (7),
- une cuisson par trempage dans un bain de saumure à une température proche de la température d'ébullition ;
- un lavage pour éliminer les mousses et autres ;
- un refroidissement par trempage dans un bain de saumure pour amener les produits à une température de conservation en vue de leur distribution ;
- un égouttage avant conditionnement ;
lequel traitement s'effectue en continu. au moyen d'une installation appropriée de convoyage, en gérant, en fonction des paramètres caractéristiques desdits produits (espèce, taille, présentation c'est-à-dire dimensions et teneur en eau des blocs), d'une part le temps de cuisson qui permet de déterminer la vitesse d'avancement des produits dans la chaîne de traitement et, d'autre part, la température du fluide de décongélation et du fluide de refroidissement.

2. Procédé de traitement selon la revendication 1, **caractérisé en ce qu'**il consiste à gérer la température du fluide de refroidissement en fonction du temps de cuisson selon les paramètres spécifiques des produits, c'est-à-dire l'espèce et la taille, et à gérer la température du fluide de décongélation en fonction du temps de cuisson et en fonction des paramètres de présentation des produits c'est-à-dire en fonction de la dimension des blocs congelés et de leur teneur en glace d'eau.

3. Installation pour la mise en oeuvre du procédé selon l'une quelconque des revendications 1 ou 2, **caractérisée en ce qu'**elle comprend :
- un poste de chargement des produits ;
- un poste de décongélation (2), par immersion des produits dans un bac (3), contenant un fluide qui circule à co-courant ;
- un poste de stabilisation des produits ;
- un poste de cuisson (8) par trempage des produits dans un fluide contenu dans un bac (9) et circulant à co-courant dans ledit bac ;
- un poste de lavage (11) comportant une rampe de pulvérisation (12) ;
- un poste de refroidissement (13) des produits par trempage dans un fluide qui circule à contre-courant dans un bac (14);
- un poste d'égouttage (16) avant le conditionnement des produits :
lesquels produits circulent d'un poste à l'autre au moyen d'un convoyeur (19). lequel convoyeur évolue à une vitesse constante déterminée par des paramètres caractéristiques des produits, c'est-à-dire espèce, taille, forme et dimensions des blocs congelés et pourcentage de glace d'eau, lesquels paramètres et laquelle vitesse, déterminent les températures des fluides de refroidissement d'une part et de décongélation d'autre part

4. Installation selon la revendication 3, **caractérisée en ce qu'**elle comprend un poste de commande (23) qui prend en compte les données D1 à savoir les paramètres spécifiques des produits à traiter c'est-à-dire l'espèce et la taille et les données D2 qui concernent les paramètres liés à la présentation des produits congelés c'est-à-dire la taille des blocs et leur teneur en glace d'eau, lequel automate, en fonction de D1 établit un temps de cuisson des produits d'où il découle une vitesse Vc d'avancement du convoyeur et, d'une part, une température TR du fluide de refroidissement et, d'autre part, en prenant en compte les données D2, une température TD du fluide de décongélation.

5. Installation selon l'une quelconque des revendications 3 ou 4, **caractérisée en ce que** le retour des fluides qui circulent dans les bacs (3, 9, 14), des postes de traitement, s'effectue de façon gravitaire.

6. Installation selon la revendication 5, **caractérisée en ce que** le circuit aller (26) de remplissage du bac (3) comporte une vanne mélangeuse (28) pilotée par un capteur de température (29) disposé à l'entrée ou à la sortie dudit bac (3).

7. Installation selon la revendication 5, **caractérisée en ce que** les circuits aller de remplissage des bacs (9, 14), et les circuits retour (35 et 47) des bacs de cuisson (9) et de refroidissement (14) comportent des systèmes du type vannes trois voies qui permettent de vidanger iesdits circuits et d'isoler le générateur de chaleur (10) et l'échangeur (15), lesquels circuits retour (35, 47) comportent en plus des filtres de régénération.

8. Installation selon la revendication 7, **caractérisée en ce que** le générateur de chaleur (10) pour la cuisson, et l'échangeur (15), ont des capacités d'accueil et de stockage des fluides qui permettent de maintenir ces derniers à température après vidange des bacs, pendant les opérations de nettoyage et/ou de désinfection notamment.

9. Installation selon la revendication 8, **caractérisée en ce qu'**elle comporte des cuves de stockage des différents bains de cuisson, lesquels bains sont transférés dans lesdites cuves par la pompe (39) qui fait circuler le fluide dans le circuit, et retournent dans la chaudière par simple gravité.

10. Installation selon l'une quelconque des revendications 3 à 9, **caractérisée en ce que** le convoyeur (19) est un convoyeur du type à tapis sans fin sur lequel sont posés directement les produits à traiter, lequel convoyeur est de préférence associé à des moyens de brossage mis en oeuvre de façon continue ou régulièrement, lors des opérations de nettoyage.

11. Installation selon l'une quelconque des revendications 3 à 9, **caractérisée en ce que** le convoyeur (19) est constitué d'un tapis à barreaux qui déplace les produits à traiter posés dans des paniers.

12. Installation selon l'une quelconque des revendications 3 à 9. **caractérisée en ce que** le convoyeur (19) est du type aérien, portant des paniers dans lesquels sont disposés les produits à traiter

13. Installation selon l'une quelconque des revendications 3 à 12, **caractérisée en ce que** le châssis support des différents bacs (3, 9, 14) et des rampes d'aspersion (7, 22) est constitué de tubes qui font office de conduits d'alimentation pour éviter la multiplication des tuyauteries.

14. Installation selon l'une quelconque des revendications 7 à 13, **caractérisé en ce qu'**elle comporte des circuits (31, 33, 41, 43, 50, 52) de nettoyage avec injection de produits permettant d'assurer un nettoyage automatique de l'installation.

## Patentansprüche

1. Verfahren zur Behandlung von Meeresprodukten vom Typ Garnelen, die in Form von tiefgefrorenen Blöcken dargeboten werden, wobei das Verfahren folgende Schritte umfaßt:
- Auftauen durch Eintauchen in einen Behälter (3), der eine auf eine entsprechende Temperatur erwärmte Flüssigkeit enthält;
- Stabilisieren durch Besprengung mit Hilfe einer Rampe (7);
- Kochen durch Einlegen in ein Lakebad mit einer Temperatur nahe dem Siedepunkt;
- Waschen zum Entfernen von Schaum und anderem;
- Abkühlen durch Einlegen in ein Lakebad, um die Produkte im Hinblick auf ihre Verteilung auf eine Konservierungstemperatur zu bringen;
- Abtropfen vor dem Verpacken;
und wobei die Behandlung mit Hilfe einer geeigneten Fördereinrichtung fortdauernd abläuft und je nach den charakteristischen Parametern der Produkte (Art, Größe, Darbietung, das heißt Größe und Wassergehalt der Blöcke) einerseits die Kochzeit steuert, durch welche die Vorrückgeschwindigkeit der Produkte in der Behandlungskette bestimmt werden kann, und andererseits die Temperatur der Auftauflüssigkeit und der Kühlflüssigkeit steuert.

2. Verfahren zur Behandlung nach Anspruch 1, **dadurch gekennzeichnet, daß** es darin besteht, die Temperatur der Kühlflüssigkeit je nach Kochzeit entsprechend den spezifischen Parametern der Produkte, das heißt Art und Größe, und die Temperatur der Auftauflüssigkeit je nach Kochzeit und je nach den Parametern bezüglich der Darbietung der Produkte zu steuern, das heißt entsprechend der Größe der tiefgefrorenen Blöcke und deren Eisgehalt.

3. Anlage zur Durchführung des Verfahrens nach Anspruch 1 oder 2, **dadurch gekennzeichnet, daß** sie folgendes umfaßt:
- eine Stelle, an der die Beschickung mit den Produkten erfolgt;
- eine Stelle zum Auftauen (2) der Produkte durch Eintauchen in einen Behälter (3) mit einer Flüssigkeit, die im Gleichstrom zirkuliert;
- eine Stelle zum Stabilisieren der Produkte;
- eine Stelle zum Kochen (8) durch Einlegen der Produkte in eine in einem Behälter (9) enthaltene Flüssigkeit, die in diesem Behälter im Gleichstrom zirkuliert;
- eine Waschstelle (11) mit einer Zerstäubungsrampe (12);
- eine Stelle zum Kühlen (13) der Produkte durch Einlegen in eine Flüssigkeit, die im Gegenstrom in einem Behälter (14) zirkuliert;
- eine Stelle zum Abtropfen (16) der Produkte, bevor sie verpackt werden;
wobei die Produkte mit Hilfe einer Fördereinrichtung (19), die sich entsprechend den charakteristischen Parametern der Produkte, das heißt Art, Größe, Form sowie Größe der tiefgefrorenen Blöcke und Prozentgehalt an Eis, mit einer konstanten Geschwindigkeit bewegt, von einer Stelle zur anderen zirkulieren, wobei die Parameter und die Geschwindigkeit die Temperatur der Kühlflüssigkeit einerseits und der Auftauflüssigkeit andererseits bestimmen.

4. Anlage nach Anspruch 3, **dadurch gekennzeichnet, daß** sie eine Steuerstelle (23) umfaßt, welche die Daten D1 berücksichtigt, das heißt die spezifischen Parameter der Produkte, die einer Behandlung unterzogen werden sollen, nämlich Art und Größe, und die Daten D2, welche die Parameter im Zusammenhang mit der Darbietung der tiefgefrorenen Produkte betreffen, nämlich Größe und Eisgehalt der Blöcke, wobei der Automat je nach D1 eine Kochzeit der Produkte bestimmt, aus der er die Vorrückgeschwindigkeit Vc der Fördereinrichtung und eine Temperatur TR der Kühlflüssigkeit einerseits und unter Berücksichtigung der Daten D2 eine Temperatur TD der Auftauflüssigkeit andererseits ableitet.

5. Anlage nach Anspruch 3 oder 4, **dadurch gekennzeichnet, daß** der Rückfluß der Flüssigkeiten, die in den Behältern (3, 9, 14) zirkulieren, von den Behandlungsstellen durch die Schwerkraft erfolgt.

6. Anlage nach Anspruch 5, **dadurch gekennzeichnet, daß** der Zuflußkreislauf (26) zur Füllung des Behälters (3) ein Mischventil (28) aufweist, das von einem Temperaturfühler (29) gesteuert wird, der sich am Eingang oder am Ausgang des Behälters (3) befindet.

7. Anlage nach Anspruch 5, **dadurch gekennzeichnet, daß** die Zuflußkreisläufe zur Füllung der Behälter (9, 14) und die Rückflußkreisläufe (35 und 47) des Kochbehälters (9) und des Kühlbehälters (14) Systeme in der Art von Dreiwegventilen aufweisen, welche die Entleerung der Kreisläufe und die Isolierung des Wärmegenerators (10) und des Austauschers (15) ermöglichen, wobei die Rückflußkreisläufe (35, 47) außerdem Regenerationsfilter aufweisen.

8. Anlage nach Anspruch 7, **dadurch gekennzeichnet, daß** der Wärmegenerator (10) für den Kochvorgang und der Austauscher (15) Flüssigkeiten aufnehmen und aufbewahren können, wodurch letztere nach der Entleerüng der Behälter während der Reinigung und/oder Desinfektion auf Temperatur gehalten werden können.

9. Anlage nach Anspruch 8, **dadurch gekennzeichnet, daß** sie Aufbewahrungswannen für die verschiedenen Kochbäder umfaßt, wobei die Bäder durch eine Pumpe (39), welche die Flüssigkeit im Krelsauf zirkulieren lässt, in die Wassen gelangen und einfach durch die Schwertkraft in den Keissel zurückfließen.

10. Anlage nach einem derAnsprüche 3 bis 9, **dadurch gekennzeichnet, daß** die Fördereinrichtung (19) ein Endlosband ist, auf das die Produkte, die behandelt werden sollen, direkt gelegt werden, wobei die Fördereinrichtung vorzugsweise mit Bürstvorrichtungen verbunden ist, die bei der Reingung ständig oder regelmäßig eingesetzt werden.

11. Anlage nach einem der Ansprüche 3 bis 9, **dadurch gekennzeichnet, daß** die Födereinrichtung (19) aus einem Band mit Stäben besteht, welches die Produkte, die behandelt werden sollen und sich in Körben befinden, bewegt.

12. Anlage nach einem der Ansprüche 3 bis 9, **dadurch gekennzeichnet, daß** die Fördereinrichtung (19) oberirdich ist und Körbe trägt, in denen die Produkte, die behandelt werden sollen, untergebracht sind.

13. Anlage nach einem der Ansprüche 3bis 12 **dadurch gekennzeichnet, daß** der Stützahmen der verschledenen Behälter (3, 9, 14) und der Besprengungsrampen (7, 22) aus Rohren besteht, welche als Speiseleitungen dienen, damit eine Vervielfachung der Rohre vermieden wird.

14. Anlage nach einem der Ansprüche 7 bis 13, **dadurch gekennzeichnet, daß** sie Reinigungskreisläufe (31, 33, 41, 43, 50, 52) mit Einspritzung von Produkten aufweist und so eine automatische Reinigung der Anlage ermöglicht.

## Claims

1. A method for seafood processing, such as prawns, as frozen blocks, which method comprises the following steps
- defrosting by immersion in a tub (3) containing the fluid heated to appropriate temperature;
- a stabilisation treatment by spraying by means of a ramp (7),
- baking by dipping into a brine bath at a temperature close to boiling temperature;
- washing to eliminate foams and others;
- cooling by dipping into a brine bath in order to bring the produces to a preservation temperature in view of their distribution;
- dripping before packaging;
which treatment is carried out continuously by means of an appropriate conveying installation, by managing, in relation to the characteristic parameters of the said produces (specie, size, aspect, i.e. dimensions and water content of the blocks), on the one hand the baking time that enables determination of the feed speed of the produces in the processing line and, on the other hand, the temperature of the defrosting fluid and of the cooling fluid.

2. A treatment method according to claim 1, **characterised in that** it consists in managing the temperature of the cooling fluid in relation to the baking time according to the specific parameters of the produces, i.e. the specie and the size, and in managing the temperature of the defrosting fluid in relation of the baking time and in relation to the aspect parameters of the produces, i.e. in relation to the dimension of the frozen blocks and of their water ice content.

3. An installation for the implementation of the method according to any one of the claims 1 or 2, **characterised in that** it comprises:
- a loading station for the produces;
- a defrosting station (2), by immersion of the produces in a tub (3), containing a co-current fluid;
- a stabilisation station for the produces;
- a baking station (8) by dipping the produces into a fluid contained in a tub (9) and flowing co-currently in the said tub;
- a washing station (11) comprising a spraying ramp (12);
- a cooling station (13) for the produces by dipping into a fluid that flows co-currently in a tub (14);
- a dripping station (16) before packaging the produces;
which produces circulate from one station to the next by means of a conveyor (19), which conveyor moves at constant speed determined by characteristic parameters of the produces, i.e. specie, size, shape and dimensions of the frozen blocks and water ice percentage, which parameters and which speed determine the temperatures of the cooling fluid on the one hand and of the defrosting fluid on the other hand.

4. An installation according to claim 3, **characterised in that** it comprises a control station (23) that takes into account the data D1 i.e. the specific parameters of the produces to be processed, i.e. the specie and the size and the data D2 which contains the parameters related to the aspect of the frozen produces, i.e. the size of the blocks and their water ice content, which automaton in relation to D1 establishes a baking time of the produces from which it derives a feeding speed Vc of the conveyor and, on the one hand, a temperature TR of the cooling fluid and, on the other hand, while taking into account the data D2, a temperature TD of the defrosting fluid.

5. An installation according to any one of claims 3 or 4, **characterised in that** the return of the fluids circulating in the tubs (3, 9, 14), from the processing stations, takes place by gravity.

6. An installation according to claim 5, **characterised in that** the outgoing circuit (26) for filling up the tub (3) comprises a mixing valve (28) controlled by a temperature sensor (29) provided at the inlet or outlet of the said tub (3).

7. An installation according to claim 5, **characterised in that** the outgoing circuit for filling up the tubs (9, 14) and the return circuits (35 and 47) from the baking (9) and cooling (14) tubs comprise three-way valve type systems that enable to empty the said circuits and to isolate the heat generator (10) and the exchanger (15), which return circuits (35, 47) comprise moreover regeneration filters.

8. An installation according to claim 7, **characterised in that** the heat generator (10) for baking, and the exchanger (15), are of sufficient capacity to accommodate and to store fluids that enable to maintain the said fluids at the requested temperature after emptying the tubs, during the cleaning and/or disinfection operations notably.

9. An installation according to claim 8, **characterised in that** it comprises tanks for storing the different baking baths, which baths are transferred into the said tanks by the pump (39) which drives the fluid in the circuit, and return to the boiler by simple gravity.

10. An installation according to any one of claims 3 to 9, **characterised in that** the conveyor (19) is a worm belt-type conveyor on which are placed directly the produces to be processed, which conveyor is preferably associated with brushing means implemented continuously or regularly, during the cleaning operations.

11. An installation according to any one of claims 3 to 9, **characterised in that** the conveyor (19) is made of a bar belt that moves the produces to be processed that are arranged in baskets.

12. An installation according to any one of claims 3 to 9, **characterised in that** the conveyor (19) is of overhead type, carrying baskets in which are placed the produces to be processed.

13. An installation according to any one of claims 3 to 12, **characterised in that** the supporting chassis of the different tubs (3, 9, 14) and of the spray ramps (7, 22) is made of tubes that serve as supply ducts to avoid too large a number of pipes.

14. An installation according to any one of claims 7 to 13, **characterised in that** it comprises cleaning circuits (31, 33, 41, 43, 50, 52) with injection of the produces in order to ensure automatic cleaning of the installation.
